Europäisches Patentamt

European Patent Office

Office européen des brevets

(11) Publication number: **0 378 917**
**A1**

## EUROPEAN PATENT APPLICATION

(21) Application number: **89313163.1**

(22) Date of filing: **15.12.89**

(51) Int. Cl.5: **B32B 17/10, C03C 17/36, H05B 3/26**

(30) Priority: **16.12.88 JP 163108/88 U**
**16.11.89 JP 298450/89**

(43) Date of publication of application:
**25.07.90 Bulletin 90/30**

(84) Designated Contracting States:
**DE FR GB IT**

(71) Applicant: **NIPPON SHEET GLASS CO., LTD.**
**5-11, 3-Chome Doshomachi**
**Chuo-ku Osaka(JP)**

(72) Inventor: **Kawaguchi, Jun**
**5-11, 3-chome Doshomachi**
**Chuo-ku Osaka(JP)**

(74) Representative: **Jackson, David Spence et al**
**REDDIE & GROSE 16, Theobalds Road**
**London, WC1X 8PL(GB)**

(54) A heat reflecting sandwich plate.

(57) A heat reflecting film (15) is bonded to the inside surface of one transparent plate (10). This heat reflecting film (15) comprises first and second metal oxide layers (16, 18) and a noble metal layer (17) with a thickness of 30 to 300 A between said first and second metal oxide layers (16, 18). The first metal oxide layer (16) is conductive with a specific resistance of $1 \times 10^{-4}$ to $1 \times 10^{-2}$ ohm/cm and a thickness of 100 to 600 A and is composed of ITO, tin oxide or zinc oxide. In addition, said heat reflecting sandwich plate is provided with a pair of bus bars (11, 12) connected electrically to said heat reflecting film (15). A second transparent plate (19) is bonded over the heat reflecting layer (15) and thus to the first plate (10) by a layer of synthetic resin (20).

*FIG. 2*

EP 0 378 917 A1

# A HEAT REFLECTING SANDWICH PLATE

## BACKGROUND OF THE INVENTION

### Field of the Invention

This invention relates to a sandwich plate, wherein a pair of transparent plates, which are made of glass, synthetic resin or the like, are stuck together by an interlayer composed of synthetic resin, that is, a transparent resin film, said sandwich plate being provided with heat reflecting performance. Further, said heat reflecting sandwich plate is suitable for use as the window glass of vehicles (especially the windowshield or rear window of a car) or the window glass of buildings.

### Description of the Prior Art

Known is the sandwich glass in which a pair of glass sheets made of float glass or the like are stuck together by an interlayer composed of transparent synthetic resin such as polyvinyl butyral, that is, a transparent resin film. Such sandwich glass possesses a multi-layer structure formed with a pair of glass sheets and a transparent resin film by which said pair of glass sheets are stuck together, thus having a great strength. In addition, said sandwich glass is very safe since the fragments of glass do not shatter even when the glass breaks.

However, if said sandwich glass is used for the window glass of a vehicle or building, solar radiant energy is abundantly transmitted into the vehicle or building especially in high summer, thus resulting in the excessive elevation of inside temperature. In midwinter, to the contrary, heat inside the vehicle or building escapes outside, causing inside temperature to decline excessively.

A Heat reflecting glass to prevent the above mentioned shortcoming and maintain a predetermined temperature inside the vehicle or building has also been hitherto known. This heat reflecting glass is obtained by having a heat reflecting film bonded onto a glass sheet. Said heat reflecting film is produced by sandwiching a thin silver layer between a pair of dielectric layers, each of which is composed of a metal oxide.

Such heat reflecting glass is superior not only in heat reflecting performance, but also in electric conductivity due to the presence of a silver layer. Accordingly, if said heat reflection glass is used as the windowshield of a car, temperature inside the car can be prevented from excessively rising in summer. In winter, moreover, clouding caused by the attachment of ice or waterdrops to the glass surface can be removed or prevented by current flowing to the above silver layer utilizing the aforementioned conductivity and thereby heating the heat reflecting glass.

However, in case that said heat reflecting glass is heated by current flowing to the heat reflecting film of the heat reflecting glass as described above, because a pair of dielectric layers sandwiching a thin silver layer have no conductivity, the current flowing through the heat reflecting layer lacks uniformity if there is a slight defect in said thin silver layer, thus causing the glass sheet to locally generate heat to an abnormal extent.

On the other hand, in case that the above described heat reflecting glass is used as the windowshield of a car, it is preferable to obtain a safe sandwich glass in which another glass sheet is stuck to the surface on the side of the heat reflecting layer of the above heat reflecting glass by a transparent resin film composed of polyvinyl butyral or the like. In this case, however, if the glass sheet locally generates heat to an abnormal extent as described above, said transparent resin film may be burnt, resulting in a marked decrease in the transparency of the sandwich glass in such a burnt portion.

## SUMMARY OF THE INVENTION

Accordingly, one object of the present invention is to provide a heat reflecting sandwich plate which not only has great strength, is highly safe with no fragments shattering upon breakage, and has a high visible light transmittance and a superb heat reflecting performance, but also greatly facilitates current flowing for heating and prevents the defective portions of the noble metal layer from being locally heated abnormally.

In accordance with the present invention, a heat reflecting sandwich plate with first and second transparent plates (which are composed of glass, synthetic resin, etc.) stuck together by a transparent resin film, is characterized in that: a heat reflecting film is bonded to the inside surface of said first transparent plate so as to be present between said first transparent plate and said transparent resin film: said heat reflecting film comprises a laminate which is produced by the successive formation of a first metal oxide layer, a noble metal layer, and a second metal oxide layer on the inside surface of said first transparent plate: said first metal oxide layer is conductive with a specific resistance of $1 \times 10^{-4}$ ohm/cm to $1 \times 10^{-2}$ ohm/cm (preferably $1 \times 10^{-4}$ ohm/cm to $1 \times 10^{-3}$ ohm/cm) and a thickness of 100 Å to 600 Å (preferably 250 Å to 500 Å) and is composed of any of indium oxide with doped tin (hereinafter called "ITO"), tin oxide, and zinc oxide; said noble metal layer has a thickness of 30 Å to 300 Å (preferably 60 Å to 180 Å); said second metal oxide layer has a thickness of 100 Å to 800 Å (preferably 300 Å to 600 Å) and is composed of any of tin oxide, indium oxide, ITO, zinc oxide, bismuth oxide, titanium oxide, and antimony oxide; and a pair of bus bars connected electrically to said heat reflecting film are provided in order to ensure current flowing to this heat reflecting film.

In the present invention, the specific resistance of the first metal oxide layer is determined to be $1 \times 10^{-4}$ ohm/cm to $1 \times 10^{-2}$ ohm/cm, and its thickness to range from 100 Å to 600 Å, for the following reasons; in case that the heat reflecting sandwich plate in accordance with the present invention is fed with electric through a pair of bus bars, even though defects have locally occurred in a highly conductive metal layer (the sheet resistance of which ranges usually from 2 ohm/square to 15 ohm/square if its thickness is 30 Å to 300 Å), but if the first metal oxide layer connected electrically to the noble metal layer possesses the above mentioned specific resistance and thickness, the current effectively flows through the first metal oxide layer in the above defective portions, so that no abnormal heating locally takes place in said defective portions. Further, if the thickness of the first metal oxide layer is decreased below 100 Å, local abnormal heat generation cannot be effectively prevented in said defective portions. In addition, if said thickness exceeds 600 Å, the resulting reflective chromaticness of the sandwich plate becomes distinguished. In any case, therefore, the results are not preferable.

In the present invention, a protective layer comprising any metal of titanium, zinc, tin, and tantalum, or any of these oxides may be provided on either side or both sides of the above mentioned noble metal layer independently from this noble metal layer. In this case, since said noble metal layer comes in contact with said first and/or second metal oxide layer not directly, but via said protective layer, the oxidation, etc. of one or both sides of said noble metal layer can be effectively prevented. Further, the thickness of said protective layer is preferably 5 Å to 50 Å. This layer does not satisfactorily work as the protective layer if its thickness is smaller than 5 Å, and it becomes difficult to maintain the visible light transmittance of the sandwich glass at 70% or higher if its thickness is larger than 50 Å. In addition, while said protective layer may be oxidized to change into a metal oxide layer even if it is formed as a metal layer, it does not matter at all whether it remains a metal layer or changes into a metal oxide layer as far as it functions as a protective layer.

In the present invention, at least one of those groups comprising a third metal oxide layer and a second noble metal layer (which is present between said second metal oxide layer and said third metal oxide layer) may be provided between said noble metal layer (hereinafter called "first noble metal layer") and said second metal oxide layer, wherein said third metal oxide layer may be conductive with a specific resistance of $1 \times 10^{-4}$ ohm/cm to $1 \times 10^{-2}$ ohm/cm (preferably $1 \times 10^{-4}$ ohm/cm to $1 \times 10^{-3}$ ohm/cm) and a thickness of 100 Å to 600 Å (preferably 250 Å to 500 Å) and may be composed of any of ITO, tin oxide, and zinc oxide, and wherein said second noble metal layer may have a thickness of 30 Å to 300 Å (preferably 60 Å to 180 Å). This can further upgrade the superior heat reflecting performance, and, as the case may be, current-heating performance, of the heat reflecting sandwich glass in accordance with the present invention. In this case, said first metal oxide layer and said third metal oxide layer may share the same composition, specific resistance, and thickness, or may differentiate part or all of them from each other. Moreover, in case that there are the plural number of said third metal oxide layers, these third metal oxide layers may share the same composition, specific resistance, and thickness, or may differentiate part or all of them from each other. Moreover, said first noble metal layer and said second noble metal layer may share the same composition and thickness, or may differentiate either or both of them from each other. In case that there are the plural number of said second noble metal layers, these second noble metal layers may share the same composition and thickness, or may differentiate either or both of them from each other.

In the present invention, the first and second transparent plates are preferably the glass sheets that are made of float glass or the like, and may be colored as occasion demands if they have a necessary visible light transmittance. In addition, the thicknesses of the first and second trasparent plates can be freely

EP 0 378 917 A1

selected dependent upon their use and, generally speaking, may range from 0.5 to 5 mm (preferably from 1 to 3 mm).

In the present invention, as described above, said first metal oxide layer is composed of any of ITO, tin oxide, and zinc oxide, and the second metal oxide layer is composed of any of tin oxide, indium oxide, ITO, zinc oxide, bismuth oxide, titanium oxide, and antimony oxide. In this case, said first metal oxide layer and said second metal oxide layer may be the same oxide, or may be the different kinds of oxides from each other. Further, said ITO may be indium oxide with doped tin in 3 to 20 wt% (preferably 5 to 10 wt%). Usually, in addition, stannic oxide ($SnO_2$) is used as said tin oxide; diindium trioxide ($In_2O_3$) as indium oxide; zinc oxide in a narrow sense (ZnO) as zinc oxide; bismuth trioxide ($Bi_2O_3$) as bismuth oxide; titanium dioxide ($TiO_2$) as titanium oxide; and diantimony pentoxide ($Sb_2O_5$) as antimony oxide, respectively.

In the present invention, said noble metal layer may be composed of any or a plurality of gold, silver, copper, palladium, and rhodium. Since especially silver absorbs the least amount of light in visible regions among these noble metals, the noble metal layer is preferably composed of silver from this point of view. However, since silver alone is not necessarily good in terms of chemical resistances such as moisture resistance, alkali resistance, acid resistance, etc., it is further preferable that as the case may be, said noble metal contains silver as its main constituent and a small amount of at least one of gold, copper, palladium, and rhodium. In this case, there is a danger that the inclusion of these noble metals in silver could change the chromaticness of the noble metal layer as compared with that in the case of silver alone and thus lower the visible light transmittance. Therefore, said contents are preferably 2 wt% or less for gold and copper, respectively, and 1 wt% or less for palladium and rhodium, respectively. In addition, in case that the plural number of these metals are contained, the total content is preferably 2% or less.

In the present invention, the material of said transparent resin film is not particularly limited so long as said transparent resin film has almost the same refractive index as those of said first and second transparent plates (e.g., about 1.52 in the case of a glass sheet), possesses good adhesion to said transparent plates and heat reflecting film, and also is transparent in visible regions. Further, a film composed of any of, for example, polyvinyl alcohol resin such as polyvinyl butyral, vinyl acetate resin such as ethylene vinyl acetate, thermoplastic polyurethane resin, and polyvinyl chloride resin can be used as said transparent resin layer, and especially, a film composed of polyvinyl butyral is preferably used. In addition, its thickness may range from 0.05 to 0.4 mm (preferably from 0.1 to 1.2 mm).

The heat reflecting sandwich plate in accordance with the present invention can be usually manufactured in the manner below.

In the first place, a pair of bus bars having a feeding point, respectively, are formed on the inside surface of the first glass sheet by screen printing and baking. In this case, such a pair of bus bars are formed so as to extend respectively along a pair of sides of said glass sheet as being opposed to each other. Then, the first metal oxide layer, the noble metal layer, and the second metal oxide layer are formed successively on the inside surface of said first glass sheet. After the first glass sheet, the transparent resin film of a sheet shape, and the second glass sheet are in turn laminated, the resulting laminate is heated at 130 to 180°C and is given a pressure of 1 to 5 kg/cm², thus allowing the transparent resin film to be thermally fused and adhere to the second metal oxide layer of the first glass sheet and the inside surface of the second glass sheet, respectively. This laminate then has its periphery cut for sizing.

In case that the heat reflecting sandwich plate in accordance with the present invention is used as the window glass of a vehicle or building, said heat reflecting sandwich plate can be usually fixed to the vehicle or building so that the first transparent plate coated with the heat reflecting film is placed outside the vehicle or building.

The heat reflecting sandwich plate in accordance with the present invention has the following advantages:

(1) It has a great strength and is thus hard to break because it possesses a multi-layer structure in which the first trasparent plate (coated with a heat reflecting film on its inside surface) and the second transparent plate are stuck together by a transparent resin film.

(2) Since the first transparent plate and the second transparent plate are stuck together by the transparent resin film, the fragments of the first and second transparent plates adhere to the transparent resin film without shattering even upon breakage of said plates, thus leading to the high safety of the heat reflecting sandwich plate.

(3) A laminate bonded as a heat reflecting film to the inside surface of the first trasparent plate is produced by the successive formation of the first metal oxide layer (which is composed of ITO, tin oxide or zinc oxide and has a thickness of 100 Å to 600 Å), a noble metal layer with a tickness of 30 Å to 300 Å, and the second metal oxide layer (which is composed of tin oxide, indium oxide, ITO, zinc oxide, bismuth oxide, titanium oxide or antimony oxide and has a thickness of 100 Å to 800 Å) on the inside surface of the

4

first transparent plate. Accordingly, said laminate functions as a good light interference film, thus resulting in a high visible light transmittance and a superior heat reflecting performance as well.

(4) A pair of bus bars connected electrically to the heat reflection layer are provided in order to ensure current flowing through this layer. As a consequence, the heat reflecting film can be quite easily fed with current via said pair of bus bars, so that current flowing for heating is substantially facilitated.

(5) Independently from a noble metal layer which is highly conductive, but does not have a very large thickness, the heat reflecting film is equipped with the first metal oxide layer which is conductive with a specific resistance of $1 \times 10^{-4}$ ohm/cm to $1 \times 10^{-2}$ ohm/cm and a thickness of 100 Å to 600 Å. When current is fed to the heat reflecting film, consequently, some current flows through not only the noble metal layer, but also the first metal oxide layer, so that even though defects including scratches are present in the noble metal layer, such defective portions are not locally heated to an abnormal extent.

The above and other objects, features, and advantages of the present invention will be readily understood by the following detailed description in conjunction with the accompanying drawings.

## BRIEF DESCRIPTION OF THE DRAWINGS

Figure 1 is a plan view of a heat reflecting sandwich plate in accordance with the first embodiment of the present invention in the state that the transparent resin film and the second glass sheet are omitted.

Figure 2 is a sectional view along the line I - I of Figure 1 in the state that the transparent resin film and the second glass sheet are not omitted.

Figure 3 is a plan view (similar to Figure 1) of a heat reflecting sandwich plate in accordance with the second embodiment of the present invention.

Figure 4 is a schematically longitudinal sectional view of a spattering apparatus used for manufacturing the heat reflecting sandwich plates in accordance with the first and second embodiments of the present invention.

Figure 5 is a similar view to Figure 1, which is to describe a current flowing test conducted with the embodiments of the present invention and a comparative example.

Figure 6 is a longitudinal sectional view of a main portion in the state that the heat reflecting film is being scratched by a ball point pen, said view being to describe the above current flowing test.

## DETAILED DESCRIPTION OF THE PREFERRED EMBODIMENTS

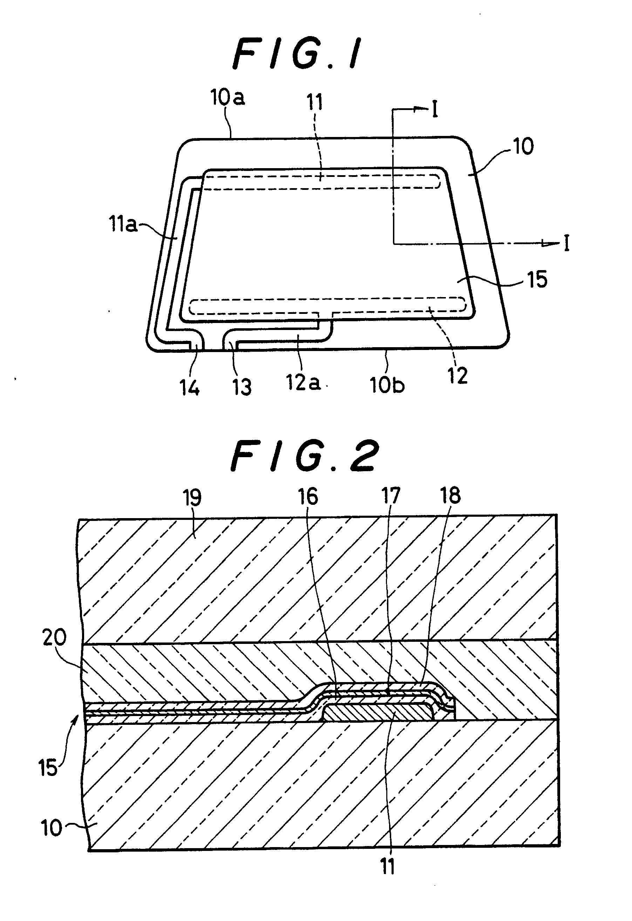

In the first place, the heat reflecting sandwich layer in accordance with the first embodiment of the present invention is described below with reference to Figures 1 and 2.

A pair of bus bars 11 and 12, respectively, are provided on the inside surface of a first glass sheet 10 so as to extend respectively along a pair of sides 10a and 10b of the first glass sheet 10 as being opposed up and down. Further, these bus bars 11 and 12 are provided with extensions 11a and 12a, respectively, which extend up to the vicinity of side 10b, and the end portions of which constitute feeding terminals, i.e., feeding points 13 and 14 near side 10b.

A heat reflecting film 15 is provided over bus bars 11 and 12 like riding between them. Incidentally, this heat reflecting film 15 can be formed. as shown in Figure 1, in a part of first glass sheet 10 excluding its outer periphery as occasion demands. Moreover, heat reflecting film 15 comprises a laminate which is produced by the successive formation of a first metal oxide layer 16, a noble metal layer 17, and a second metal oxide layer 18 on the inside surface of first glass sheet 10.

A second glass sheet 19 having substantially the same shape as the first glass sheet 10 is arranged so as to be opposed to the latter on the inside surface of first glass sheet 10 provided with a pair of bus bars 11 and 12 and heat reflecting film 15, respectively. Such first and second glass sheets 10 and 19 are stuck together by a transparent resin layer 20 over their whole surfaces.

Accordingly, if a pair of feeding terminals of a power source (not shown in the figure) is connected to a pair of feeding terminals 13 and 14, and a voltage of, for example, tens of volts boosted from a battery of 12 V is thus applied to said pair of feeding terminals 13 and 14, then current flows through the heat reflecting film 15 in its longitudinal direction (upward/downward in Figure 1). In the heat reflecting sandwich plate, as a result, the outside surface of first glass sheet 10 is heated to a temperature in a range of, for example, several degrees C to about 10° C.

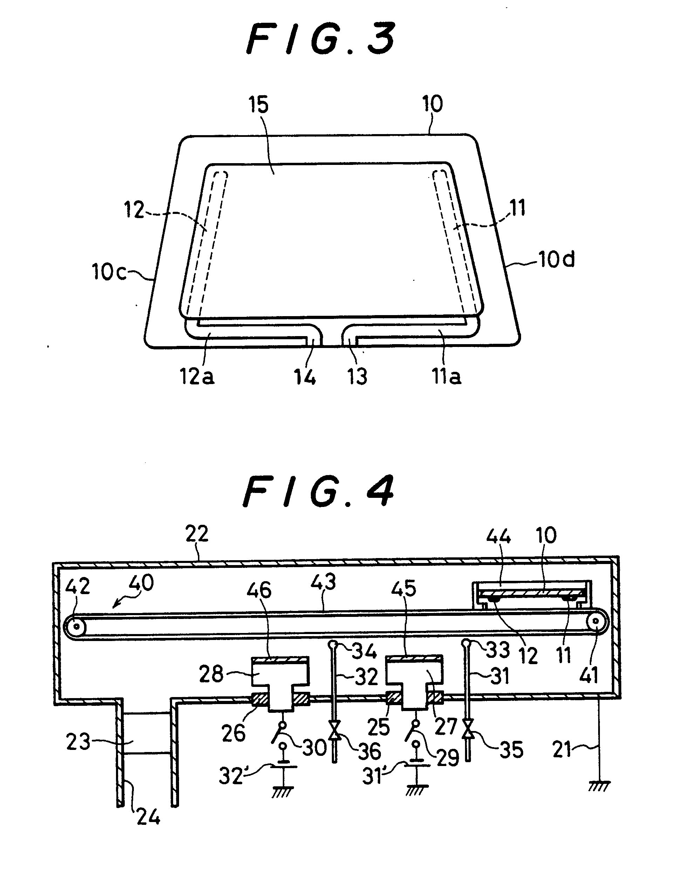

Secondly, a heat reflecting sandwich plate in accordance with the second embodiment of the present invention will be described below with reference to Figure 3. This heat reflecting sandwich plate has substantially the same composition as the heat reflecting sandwich plate shown in Figures 1 and 2 except for the difference in the composition of bus bars 11 and 12. Therefore, the portions common to both are put the common reference numbers to omit the duplicate description.

In Figure 3, a pair of bus bars 11 and 12 extend along a pair of sides 10C and 10d, respectively, which are opposed to each other right and left on first glass sheet 10. As a consequence, if a supply voltage is applied to a pair of feeding terminals 13 and 14 in the same manner as in the case of the first embodiment illustrated in Figures 1 and 2, a current flows transversely (rightward/leftward in Figure 3) through the heat reflecting film 15.

Figure 4 shows a spattering apparatus which is used for manufacturing the heat reflecting sandwich plates as shown in Figures 1 to 3.

In Figure 4, the spattering apparatus has a vacuum tank 22 which is grounded by an earth line 21, and an exhaust outlet 24 provided with a variable valve 23 is formed in a portion of said vacuum tank 22. Further, this vacuum tank 22 is connected to a vacuum pump (not illustrated) via said exhaust outlet 24, and such a vacuum pump causes a pressure reduction inside vacuum tank 22.

Magnetron cathodes 27 and 28 apart from each other are fitted to the bottom of a vacuum tank 22 through electric insulators 25 and 26, and ON/OFF switches 29, 30 and direct current sources 31', 32', respectively, are connected to said cathodes 27 and 28. In addition, supply pipes 31 and 32 extending through the bottom of vacuum tank 22 are provided near each of magnetron cathodes 27 and 28. Moreover, the ends of these supply pipes 31 and 32 are provided with supply openings 33 and 34, and said supply pipes 31 and 32 are provided with valves 35 and 36 outside the vacuum tank 22. Then, oxygen gas is supplied from a gas supply pipe 31, and an inert gas such as argon gas from gas supply pipe 32, respectively into the vacuum tank 22.

Inside vacuum tank 22, a reciprocatable conveyor 40 is arranged above cathodes 27 and 28, and is equipped with a pair of pulleys 41 and 42 provided near both right and left ends of the vacuum tank 22 and a conveyor belt 43 passed round said pulleys 41 and 42.

Described below is a process for manufacturing the heat reflecting sandwich plate shown in Figures 1 and 2 by using the spattering apparatus illustrated in Figure 4.

In the first place, an ITO target 45 is fitted on the top surface of cathode 27, and an Ag target 46 on the top surface of cathode 28, respectively.

Then, The first glass sheet 10, on which a pair of bus bars 11 and 12 having, for example, a width of 20 mm and a thickness of 20 um are formed beforehand, are retained in a holder 44 so as for bus bars 11 and 12 to be positioned beneath said glass sheet as shown in Figure 4. And this holder 44 is placed on conveyor belt 43. In this case, a bronze-colored glass sheet having a thickness of 2.1 mm was used as said first glass sheet 10. In order to have a pair of bus bars 11 and 12 formed beforehand, the following process may be satisfactory to apply; a mixture comprising silver fine grains, an organic resin binder, and a low melting point glass frit is applied to the first glass sheet 10 by screen printing and is then baked simultaneously with the bending of the glass sheet at a temperature of 580 to 600 °C. Moreover, if a masking material is applied to the inside surface of the first glass sheet 10 beforehand in a square shape along the outer periphery of said glass sheet, first and second metal oxide layers 16 and 18 and the noble metal layer 17 are not formed in this peripheral portion.

In the next place, with the variable valve 23 opened, the pressure inside vacuum tank 22 is once reduced to a high vacuum level. Then, with the valve 35 opened, a mixed gas of argon gas and oxygen gas is supplied from the supply opening 33 of the gas supply pipe 31, followed by the equilibration of the inside of the vacuum tank 22 at $1.5 \times 10^{-3}$ Torr. The mixing ratio for this mixed gas is, for example, for example, 6 ml/min of oxygen gas to 100 ml/min of argon gas.

Next, with the ON/OFF switch 29 turned on, a negative voltage is applied to the cathode 27 to gain the current flow of 10 Å, by which spattering is generated. In addition, almost simultaneously with this, the conveyor belt 43 is moved transversely (i.e., rightward/leftward in Figure 3) from either one side to another at a speed of 0.7 m/min, causing the glass sheet 10 on the conveyor belt 43 to be likewise moved. As a result, an ITO layer, i.e., the first metal oxide layer 16 having a specific resistance of $8.0 \times 10^{-3}$ ohm/cm and a thickness of 360 Å is formed on the surface of the glass sheet 10 as shown in Figure 2. The ITO layer 16 is composed of tin oxide in 10% and indium oxide in 90%.

Then, with the switch 29 turned off as well as the valve 35 closed, and further with the variable valve 23 opened, the pressure inside the vacuum tank 22 is once reduced to a high vacuum level. Moreover, with valve 36 opened, argon gas is supplied at a rate of 100 ml/min from the supply opening 34 of the gas supply pipe 32, thus leading to the equilibration of the inside of the vacuum tank 22 at $1.4 \times 10^{-3}$ Torr.

Further, with the ON/OFF switch 30 turned on, a negative voltage is applied to the cathode 28 to allow the currrent flow of 90 Å, by which spattering is generated. In addition, almost simultaneously with this, the conveyor belt 43 is moved in the rightward/leftward direction from either one side to another at a speed of 0.7 m/min, thus causing the glass sheet 10 on the conveyor belt 43 to be likewise moved. As a result, an Ag layer, i.e., the noble metal layer 17, having a thickness of 150 Å, is formed, as shown in Figure 2, on the surface of the first metal oxide layer 16 of the glass sheet 10.

Then, with the ON/OFF switch 30 turned off as well as the valve 36 closed, and further with the variable 23 opened, the pressure inside the vacuum tank 22 is once reduced to a high vacuum level. Moreover, with the valve 35 opened, a mixed gas of argon gas (at 100 ml/min) and oxygen gas (at 10 ml/min) is supplied from the supply opening 33 of the gas supply pipe 31, so that the inside of the vacuum tank 22 tank 22 is equilibrated at $1.5 \times 10^{-3}$ Torr.

Next, with the ON/OFF switch 29 turned on, a negative voltage is applied to the cathode 27 to gain the current flow of 15 Å, by which spattering is generated. In addition, almost simultaneously with this, the conveyor belt 43 is moved in the rightward/leftward direction from either one side to another at a speed of 0.7 m/min, thereby allowing the glass sheet 10 on the conveyor belt 43 to be likewise moved. As a result, an ITO layer, i.e., the second metal oxide layer 18, having a specific resistance of $8.0 \times 10^{-3}$ ohm/cm and a thickness of 540 Å is formed on the surface of the noble metal layer 17 of the glass sheet 10 as shown in Figure 2.

In the next, the first glass sheet 10 having the first metal oxide layer 16, the noble metal layer 17, and the second metal oxide layer 18 successively formed thereon is taken out from the inside of the vacuum tank 22 of the spattering apparatus shown in Figure 4. Then, the masking material applied to this glass sheet 10 beforehand is removed with a solvent.

Further, a transparent resin film 20 comprising a film of polyvinyl butyral having a thickness of 0.15 mm, and the transparent glass sheet 19 having a thickness of 2.1 mm are successively laminated on the second metal oxide layer 18 of the bronze-colored glass sheet 10. With this laminate heated at 150° C and then pressurized with a pressure of 3 kg/cm$^2$, the polyvinyl butyral film 19 is thermally fused to adhere to the second metal oxide layer 18 of the glass sheet 10 and the inside surface of the glass sheet 19, respectively.

Next, the periphery of said laminate is cut into desired sizing, resulting in the heat reflecting sandwich plate as shown in Figures 1 and 2.

Then, in the above described embodiments, the heat reflecting sandwich plates are likewise manufactured by making the following variations: changing the thickness of the first metal oxide layer 16 from 360 Å to 420 Å; changing the material of the first metal oxide layer 16 from ITO to ZnO; providing the first protective layer (composed of Ti and having a thickness of 5 Å) between the first metal oxide layer 16 and the noble metal layer 17, and providing the second protective layer (composed of Ti and having a thickness of 5 Å) between the noble metal layer 17 and the second metal oxide layer 18: changing the thickness of the second metal oxide layer 18 from 540 Å to 420 Å: and changing the material of the second metal ox! de layer 18 from ITO to TiO$_2$.

Table 1 below indicates the composition of each layer of heat reflecting film 15 in the example of the present invention (Samples 1 to 4) and a comparative example (a comparative sample) for the heat reflecting sandwich plates obtained in the above described manner. Furthermore, Table 2 presents the optical characteristics of each sample indicated in said Table 1 (such as visible light transmittance and the Hunter's chromaticness a and b of transmitted visible light, as well as visible light reflectance and the Hunter's chromaticness a and b of reflected visible light; "Hunter chromaticness a and b" herein means the color chromaticness a and b of Hunter's color specification system). Further, among the samples in these Tables 1 and 2. Sample 1 was obtained by the embodiment described above with reference to Figures 1, 2, and 4.

Table 1

| Type of sample | Layer 16 | First protect. layer | Ag layer 17 | Second protect. layer | Layer 18 |
|---|---|---|---|---|---|
| Sample 1 | ITO/360 Å | — | 150 Å | — | ITO/540 Å |
| Sample 2 | ITO/360 Å | Ti/5 A | 150 Å | — | ITO/540 Å |
| Sample 3 | ITO/360 Å | Ti/5 A | 150 Å | Ti/5 Å | ITO/540 Å |
| Sample 4 | ITO/420 Å | — | 150 Å | — | ITO/420 Å |
| Comparative sample | $TiO_2$/360 Å | — | 150 Å | — | $TiO_2$/540 Å |

Table 2

| Type of sample | Visible light Transmittance | Transmitted visible light | | Visible light reflectance | Reflected visible light | |
|---|---|---|---|---|---|---|
| | | a | b | | a | b |
| | % | | | % | | |
| Sample 1 | 74.6 | -3.1 | 6.8 | 11.8 | 0.8 | 0.6 |
| Sample 2 | 73.0 | -3.0 | 6.5 | 11.5 | 1.0 | 0.8 |
| Sample 3 | 71.8 | -3.2 | 6.0 | 11.0 | 1.4 | 1.3 |
| Sample 4 | 77.2 | -3.4 | 6.4 | 8.7 | 3.0 | 0.9 |
| Comparative sample | 74.0 | -3.0 | 6.6 | 11.3 | 0.8 | 0.6 |

It is clearly seen from Tables 1 and 2 that the heat reflecting sandwich plate in the example of the present invention (Samples 1 to 4) is comparable with the comparative example (comparative sample) (in which the first metal oxide layer 16 is not conductive) in visible light transmittance and its Hunter's chromaticness as well as in visible light reflectance and its Hunter's chromaticness.

In the next, the results of a current-flowing test with the example of the present invention (Samples 1 to 4) and the comparative example (comparative sample) is described below.

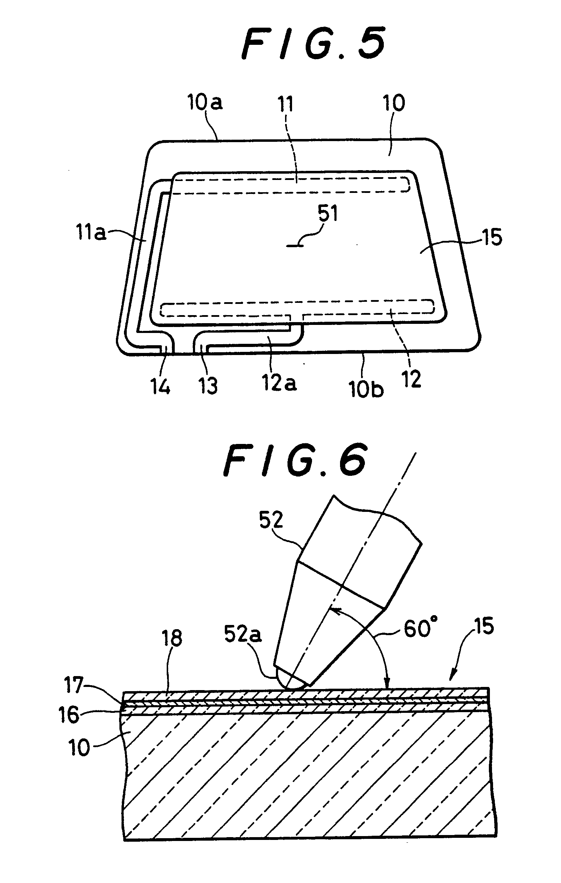

Firstly, the objects of the current-flowing test were prepared in the following manner; Samples 1 to 4 and the comparative sample were prepared. In which the bus bars 11 and 12 and the heat reflecting film were formed on the first glass sheet 10, while the transparent resin film 20 and the second glass sheet 19 remained inn laminated; and only one scratch 51 extending nearly in parallel with the bus bars 11 and 12 was, as illustrated in Figure 5, given to the substantailly central portion of each of said samples. Said scratch was, as shown in Figure 6, formed in the follwing manner: the end 52a of a ball point pen 52 was brought into contact with heat reflecting film 15 with said ball point pen 52 maintained at an angle of 60°, and said heat reflecting film was then scratched while moving the end 52a of the ball point pen 52 at a speed of 50 mm/min in the above mentioned state of contact. The downward load in the axial direction of the ball point pen 52 at this point had four kinds such as 500 g, 750 g, 1,000 g and 1,500 g. The width of said scratch 51 was about 0.2 mm in case of minimum load (500 g), and about 0.4 mm to 0.5 mm in case of maximum load (1,500 g).

Next, the second glass sheet 19 was, as described earlier, stuck to the first glass sheet 10 through the transparent resin film 20. A voltage was then applied to the heat reflecting film 15 for 10 minutes via a pair of bus bars 11 and 12, leading to the flow of a current of 1,000 $W/m^2$. In this case, if abnormal heating occurs locally in the heat reflecting film 15, the transparent resin film 19 is burnt by this heat, so that the burnt portions locally change the refractive index of the heat reflecting sandwich plate. Accordingly, whether the above mentioned change in the refractive index had taken place was tested with light transmitted through the heat reflecting sandwich plate.

Table 3 below shows the results of the above test.

Table 3

| Load upon marring (g) | Samples 1 to 4 | Comparative sample |
|---|---|---|
| 500 | not heated locally | heated locally |
| 750 | same as above | same as above |
| 1,000 | same as above | same as above |
| 1,500 | same as above | same as above |

It is apparent from the above Table 3 that in the example of the present invention there occurred no local heating of an abnormal degree, whereas abnormal heating took place locally in the comparative example.

Also in the comparative example, it proved that while abnormal heating locally occurred in the case of the narrow scratch 51 extending in parallel with the bus bars 11 and 12, abnormal heating was less generated locally in a circular scratch or in a scratch extending substantially perpendicularly to the bus bars.

Having described illustrative embodiments of the invention with reference to the accompanying drawings, it is to be understood that the invention is not limited to such precise embodiments, and that various changes and modifications may be effected therein by one skilled in the art without departing from the scope and spirit of the invention as defined in the appended claims.

## Claims

1. A heat reflecting sandwich plate with first and second transparent plates stuck together by a transparent resin film, characterized in that:

a heat reflecting film (15) is bonded to the inside surface of said first transparent plate (10) so as to be present between said first transparent plate (10) and said transparent resin film (20);

said heat reflecting film (15) comprises a laminate which is produced by the successive formation of a first metal oxide layer (16), a noble metal layer (17), and a second metal oxide layer (18) on the inside surface of said first transparent plate (10);

said first metal oxide layer (16) is conductive with a specific resistance of $1 \times 10^{-4}$ ohm/cm to $1 \times 10^{-2}$ ohm/cm and a thickness of 100 Å to 600 Å and is composed of any of the following ones:

(1) indium oxide with doped tin,

(2) tin oxide, and

(3) zinc oxide;

said noble metal layer (17) has a thickness of 30 Å to 300 Å:

said second metal oxide layer (18) has a thickness of 100 Å to 800 Å and is composed of any of the following ones;

(i) tin oxide,

(ii) indium oxide,

(iii) indium oxide with doped tin,

(iv) zinc oxide,

(v) bismuth oxide,

(vi) titanium oxide, and

(vii) antimony oxide; and

a pair of bus bars (11 and 12) connected electrically to said heat reflecting film (15) are provided in order to ensure current flowing to the heat reflecting film (15).

2. A heat reflecting sandwich plate as claimed in Claim 1, characterized in that said pair of bus bars (11 and 12) are bonded to the inside surface of said first transparent plate (10) so as to be present between said first transparent plate (10) and said first metal oxide layer (16) and so as to extend along a pair of sides of said heat reflecting film (15) facing each other.

3. A heat reflecting sandwich plate as claimed in Claim 1 or 2, characterized in that feeding points (13 and 14) are provided in said pair of bus bars (11 and 12).

4. A heat reflecting sandwich plate as claimed in Claim 1, 2 or 3, characterized in that a protective layer made of any metal of titanium, zinc, tin, and tantalum, or any of these oxides, is provided on both surfaces of said noble metal layer (17).

5. A heat reflecting sandwich plate as claimed in any of Claims 1 to 4, characterized in that; at least one of the groups comprising a third metal oxide layer and a second noble metal layer (which is present between said second metal oxide layer (18) and said third metal oxide layer) is provided between said noble metal layer (17) and said second metal oxide layer (18):
said third metal oxide layer is conductive with a specific resistance of $1 \times 10^{-4}$ ohm/cm to $1 \times 10^{-2}$ ohm/cm and a thickness of 100 Å to 600 Å and is composed of any of the following ones:
(1) indium oxide with doped tin,
(2) tin oxide, and
(3) zinc oxide: and
said second noble metal layer has a thickness of 30 Å to 300 Å.

6. A heat reflecting sandwich plate as claimed in any of Claims 1 to 5, characterized in that said first transparent plate (10) and second transparent plate (19), respectively, are glass sheets.

7. A heat reflecting sandwich plate as claimed in any of Claims 1 to 6, characterized in that said noble metal layer (17) is composed of any or a plurality of gold, silver, copper, palladium, and rhodium.

8. A heat reflecting sandwich plate as claimed in any of Claims 1 to 7, characterized in that said noble metal layer (17) contains silver as its main constituent, and a small amount of at least one of gold, copper, palladium, and rhodium.

9. A heat reflecting sandwich plate as claimed in any of Claims 1 to 7, characterized in that said noble metal layer (17) is composed of silver.

10. A heat reflecting sandwich plate as claimed in any of Claims 1 to 9, characterized in that said transparent resin film (20) is composed of polyvinyl butyral.

# FIG. 1

# FIG. 2

# F I G. 3

# F I G. 4

# F I G. 5

# F I G. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 303 586  (MONSANTO CO.)<br>* The whole document * | 1-10 | B 32 B    17/10<br>C 03 C    17/36<br>H 05 B     3/26 |
| Y | | 1-4,6-10 | |
| Y | WO-A-8 806 095  (LIBBEY-OWENS-FORD CO.)<br>* Page 8, lines 30-33; page 9, line 22 - page 10, line 1; page 10, lines 9-36 * | 1-4,6-10 | |
| A | WO-A-8 801 230  (LIBBEY-OWENS-FORD)<br>* Page 5, line 6 - page 6, line 12; figures 1,2 * | 1-10 | |
| A | EP-A-0 077 672  (TEIJIN LTD)<br>* Page 5, line 1 - page 6, line 6; page 8, line 36 - page 9, line 4 * | 1-4,6-10 | |
| A | GB-A-2 126 256  (K.K. TOYOTA)<br>* Page 1, lines 46-90; claims 1-11 * | 1-4,6-10 | |
| A | EP-A-0 108 616  (DONNELLY MIRRORS, INC.)<br>* Page 17, lines 14-16; page 20, lines 8-20; claims 1,9 * | 1,5 | TECHNICAL FIELDS SEARCHED (Int. Cl.5)<br><br>B 32 B<br>C 03 C<br>H 05 B |
| A | US-A-2 628 927  (W.H. COLBERT et al.)<br>* Figures 1,2,9; column 13, lines 46-63 * | 1-10 | |
| A | US-A-2 628 921  (A.R. WEINRICH)<br>* The whole document * | 1-10 | |
| A | FR-A-2 586 245  (NIPPON SHEET GLASS CO.) | | |

The present search report has been drawn up for all claims

| Place of search | Date of completion of the search | Examiner |
|---|---|---|
| THE HAGUE | 27-03-1990 | VAN BELLEGHEM W.R. |